# EUROPEAN PATENT SPECIFICATION

(11) **EP 0 386 338 B1**
(45) Date of publication and mention of the grant of the patent: **01.06.1994**
(21) Application number: 89123215.9
(22) Date of filing: 15.12.1989
(51) Int. Cl.: C22C 29/02, C22C 29/16, C22C 26/00, C04B 35/58

(54) **Hard sintered body for tools**
Harter Sinterkörper für Werkzeuge
Corps dur fritté pour des outils

(30) Priority: 07.03.1989 JP 52962/89; 07.03.1989 JP 52963/89
(43) Date of publication of application: 12.09.1990
(73) Proprietor: SUMITOMO ELECTRIC INDUSTRIES, LTD., Osaka-shi, Osaka 541 (JP)
(72) Inventor: Fukaya, Tomohiro c/o Itami Works Sumitomo, Itami-shi Hyogo-ken (JP); Nakai, Tetsuo c/o Itami Works Sumitomo, Itami-shi Hyogo-ken (JP); Goto, Mitsuhiro c/o Itami Works Sumitomo, Itami-shi Hyogo-ken (JP)
(74) Representative: Herrmann-Trentepohl, Werner, Dipl.-Ing.

(56) References cited:
- EP-A- 0 228 693
- FR-A- 2 375 155
- PATENT ABSTRACTS OF JAPAN, vol. 6, no. 257 (C-140), 16th December 1982;& JP-A-57 149 448 (MITSUBISHI)
- PATENT ABSTRACTS OF JAPAN, vol. 7, no. 219 (C-188), 29th September 1983;& JP-A-58 113 349 (MITSUBISHI)
- PATENT ABSTRACTS OF JAPAN, vol. 13, no. 55 (M-795), 8th February 1989;& JP-A-63 260 701 (SUMITOMO)
- PATENT ABSTRACTS OF JAPAN, vol. 12, no. 398 (C-538), 21st October 1988;& JP-A-63 143 237 (SUMITOMO)

## Description

### BACKGROUND OF THE INVENTION

### Field of the Invention

The present invention relates to an improvement in a hard sintered body for tools prepared from cubic boron nitride (hereinafter referred to as CBN).

### Description of the Background Art

CBN is the hardest material next to diamond, and a sintered body prepared from the same is applied to various cutting tools. Japanese Patent Laying-Open No. 53-77811(1978) discloses an example of such a CBN sintered body suitable for cutting tools.

The sintered body disclosed in the above prior art contains 80 to 40 percent by volume of CBN and has a remainder mainly formed of a carbide, nitride, boride or silicide of a transition metal belonging to the group IVa, Va or VIa of the periodic table or a mixture or solid solution compound thereof, with addition of Al and/or Si. In this CBN sintered body, the aforementioned compound forms continuous bonding phases in the structure of the sintered body.

In the aforementioned hard sintered body for tools, a bonding compound is prepared from a carbide, nitride, boride or silicide of a transition metal belonging to the group IVa, Va or VIa of the periodic table or a solid solution compound thereof. Since such a compound has excellent thermal conductivity and high hardness, the sintered body generally exhibits high performance when the same is applied to a cutting tool.

However, when the sintered body which is disclosed in Japanese Patent Laying-Open No. 53-77811(1978) and now on the market is applied to high-speed cutting of steel, for example, crater wear is developed depending on cutting conditions, to relatively shorten the life of the cutting tool.

EP-A-0 228 693 discloses a sintered compact obtained by sintering a mixture containing about 50 to 75 Vol.-% of cubic boron nitride (cBN) and a residue of a binder under cBN-stable superhigh pressure conditions. The binder contains about 20 to 50 Wt.-% of Al and one or more Ti compounds selected from a group of those expressed as TiN_{z}, Ti(C,N)_{z}, TiC_{z}, (Ti,M)C_{z}, (Ti,M) (C,N)_{z} and (Ti,M)N_{z} (where M indicates a transition metal of the group IVa, Va or VIa of the periodic table excepting Ti, and z is within a range of 0,5 ≦ z ≦0.85). The atomic ratio of the content of Ti to that of the transition metal element of the group IVa, Va or Via excepting Ti in the binder is about 2/3 to 97/100, and the total tungsten concentration in the binder is about 4 to 40 Wt.-%.

### SUMMARY OF THE INVENTION

Accordingly, the object of the present invention is to provide a hard sintered body for tools which is superior in crater wear resistance to the aforementioned conventional CBN sintered body and capable of high-speed cutting of steel.

In order to attain the aforementioned object, the inventors have made deep study to find that a hard sintered body for tools which is higher in hardness than and superior in crater wear resistance to the conventional CBN sintered body can be obtained by sintering mixed powder containing at least 20 percent by volume and not more than 70 percent by volume of CBN powder and having a remainder formed of binder powder described below in CBN-stable conditions under a superhigh pressure.

According to the present invention, provided is a sintered body which is obtained by mixing binder powder containing 2 to 20 percent by weight of Al in the form of either Al or a compound of Al and Ti, and 2 to 20 percent by weight of W in the form of W, WC or a compound of W and Ti, or further containing 1 to 10 percent by weight of one or more ferrous metals, and having a remainder formed of one or more Ti compounds selected from a group of TiN_{z}, TiC_{z}, Ti(C,N)_{z}, (Ti,M)N_{z}, (Ti,M)C_{z} and (Ti,M)(C,N)_{z}, where M represents transition metal element(s) belonging to the group IVa, Va and/or VIa of the periodic table excluding Ti and 0.1 ≦ z ≦ 0.45, such that the atomic ratio of Ti to transition metal element(s) belonging to the group IVa, Va and/or VIa of the periodic table including Ti is at least 2/3 and not more than 97/100, with CBN powder and sintering the mixed powder under a superhigh pressure.

The CBN sintered body according to the present invention contains at least one or more Ti compounds selected from a group of TiN, TiC, Ti(C,N), (Ti,M)N, (Ti,M)C and (Ti,M)(C,N), titanium boride, aluminum boride, aluminum nitride, a tungsten compound and tungsten in addition to cubic boron nitride, or further containing one or more ferrous metal compounds in its product, while the CBN particles are joined with each other through bonding phases in the structure of the sintered body.

It can be inferred that the sintered body according to the present invention is excellent in crater wear resistance for the following reasons:

It is generally considered that crater wear is developed since a binder is abraded due to friction of a tool cutting face made by high-temperature shavings, to cause falling of CBN particles. In order to improve crater wear resistance of a CBN sintered body, therefore, it is necessary to improve wear resistance of the binder under a high temperature and strongly join the binder and CBN or constituents of the binder themselves with each other, while strength of the binder and junction strength of CBN and the binder or the constituents of the binder themselves must not be reduced under a high temperature which is applied to the tool cutting face.

It may be inferred that, according to the present invention, the Ti compound(s) and Al contained in the binder react with CBN during sintering under high temperature/high pressure to generate titanium boride, aluminum boride, titanium nitride and aluminum nitride, thereby to strongly join CBN with the binder. In particular, excessive Ti contained in one or more Ti compounds selected from the group of TiN_{z}, TiC_{z}, Ti(C,N)_{z}, (Ti,M)N_{z}, (Ti,M)C_{z} and (Ti,M)(C,N)_{z}, where M represents transition metal element(s) belonging to the group IVa, Va and/or VIa of the periodic table excluding Ti and 0.1 ≦ z ≦ 0.45, easily reacts with CBN crystals to generate TiB₂ and TiN.

Generation of TiB₂ is preferable since TiB₂ has high hardness, excellent wear resistance and high junction strength with CBN and the binder, and these characteristics are not deteriorated even if a high temperature is applied. The value of z in the above general formulas of the Ti compounds is within a range of 0.1 ≦ z ≦ 0.45 since the amount of generation of TiB₂ is reduced if the value of z exceeds 0.45 to unpreferably reduce strength and wear resistance of the binder. If the value of z is less than 0.1, on the other hand, the metal Ti remains in the binder contained in the sintered body, to deteriorate wear resistance of the binder.

The binder is further increased in strength and wear resistance by solution-treating or mixing nitride(s) and carbo-nitride(s) of transition metal(s) belonging to the group IVa, Va and/or VIa of the periodic table with a nitride and cabo-nitride of Ti, to further improve the characteristics of the sintered body as compared with the case of preparing the binder from only Ti compound(s). The atomic ratio of Ti contained in the binder to metal(s) belonging to the group IVa, Va and/or VIa of the periodic table including Ti must be 2/3 to 97/100. If the Ti content is less than 2/3, bond strength of the binder and CBN is unpreferably reduced. When the atomic ratio exceeds 97/100, on the other hand, the binder is reduced in wear resistance and strength.

The binder contains 2 to 20 percent by weight of Al. The function of Al for improving bond strength of the CBN particles and the binder is reduced if the Al content is less than 2 percent by weight, while the binder itself is reduced in hardness if the Al content exceeds 20 percent by weight, to be also reduced in wear resistance.

The content of W in the form of W, WC or a compound of W and Ti is 2 to 20 percent by weight. The binder is not improved in strength if the W content is less than 2 percent by weight, while the content of the Ti compound(s) is reduced if the W content exceeds 20 percent by weight, to unpreferably reduce junction strength of CBN and the binder. It has been recognized that the binder is improved in strength to exhibit excellent characteristics particularly when M represents tungsten in the aforementioned chemical formulas.

The binder preferably contains 1 to 10 percent by weight of one or more ferrous metals to be further increased in strength and hardness, thereby to further improve the characteristics of the sintered body. This may be because the ferrous metals are highly wettable with borides such as TiB₂ and AlB₂, to attain stronger bonding of the borides contained in the sintered body. If the content of the ferrous metals is less than 1 percent by weight, the characteristics are not improved. If the said content exceeds 10 percent by weight, on the other hand, the binder itself is unpreferably reduced in strength and hardness. The ferrous metals include Fe, Co and Ni.

In the sintered body according to the present invention, CBN particles are held by bonding phases formed by the aforementioned binder. The CBN content is at least 20 percent by volume and not more than 70 percent by volume. If the content of the CBN particles is less than 20 percent by volume, the CBN sintered body is ineffectively reduced in hardness. If the content of the CBN particles exceeds 70 percent by volume, on the other hand, the sintered body is reduced in toughness and deteriorated in performance.

According to the present invention, the binder containing the Ti compound(s), Al, the ferrous metal(s), WC and the like is mixed with CBN and the mixed powder is sintered under superhigh pressure/temperature, whereby a hard sintered body for tools having excellent junction strength of CBN and the binder or constituents of the binder themselves can be obtained since the binder contains 2 to 20 percent by weight of Al to form aluminum boride, aluminum nitride and the like as well as 2 to 20 percent by weight of a W component which is in the form of W, a W compound or the like, or further containing 1 to 10 percent by weight of ferrous metal(s), while also containing a carbide, nitride, carbo-nitride etc. of Ti. The sintered body according to the present invention is suitably applied to high-speed cutting of steel or cast iron since the same is particularly excellent in crater wear resistance.

These and other objects, features, aspects and advantages of the present invention will become more apparent from the following detailed description of the present invention.

### DESCRIPTION OF THE PREFERRED EMBODIMENTS

### Example 1

Nitride powder or carbo-nitride powder containing Ti was mixed with aluminum powder and WC powder to prepare binder powder materials of not more than 1 µm in average particle size through a pot and a ball of cemented carbide, as shown in Table 1. These binder powder materials were mixed with CBN powder materials of not more than 3 µm in particle size in volume ratio of 45:55, to prepare mixed powder materials. Circular plates of cemented carbide composed of WC - 10 wt.% Co were introduced into Mo vessels, which were then filled with these mixed powder materials. The vessels were introduced into superhigh pressure/temperature apparatuses, and sintered under a pressure of 50 kb and a temperature of 1250°C for 25 minutes.

Sintered bodies thus obtained were examined through X-ray diffraction, to observe peaks which were regarded as those of CBN, nitrides, carbides and carbo-nitrides containing Ti, TiB₂, AlB₂, AlN and borides and carbides of W, or W.

Table 2 shows Vickers hardness values of these sintered bodies.

The aforementioned respective sintered bodies were worked into inserts for cutting work, to cut round bars of 100 mm in diameter prepared from SUJ2 (H_{RC}: 59 to 61). Cutting conditions were as follows:
Cutting Speed: 210 m/min.
Depth of Cut: 0.15 mm
Feed Rate: 0.1 mm/rev.
Type: Dry
Table 2 also shows times of cutting performed before cutting edge chipping.

Referring to Table 1, the column of "Atomic Ratio [Ti:M]" shows the atomic ratios of Ti to transition metal elements belonging to the group IVa, Va and/or VIa of the periodic table excluding Ti.

Referring to Tables 1 and 2, samples Nos. 8 to 12 were prepared as reference examples. As to the reference examples shown in Table 1, underlined values are out of the range of composition according to the present invention.

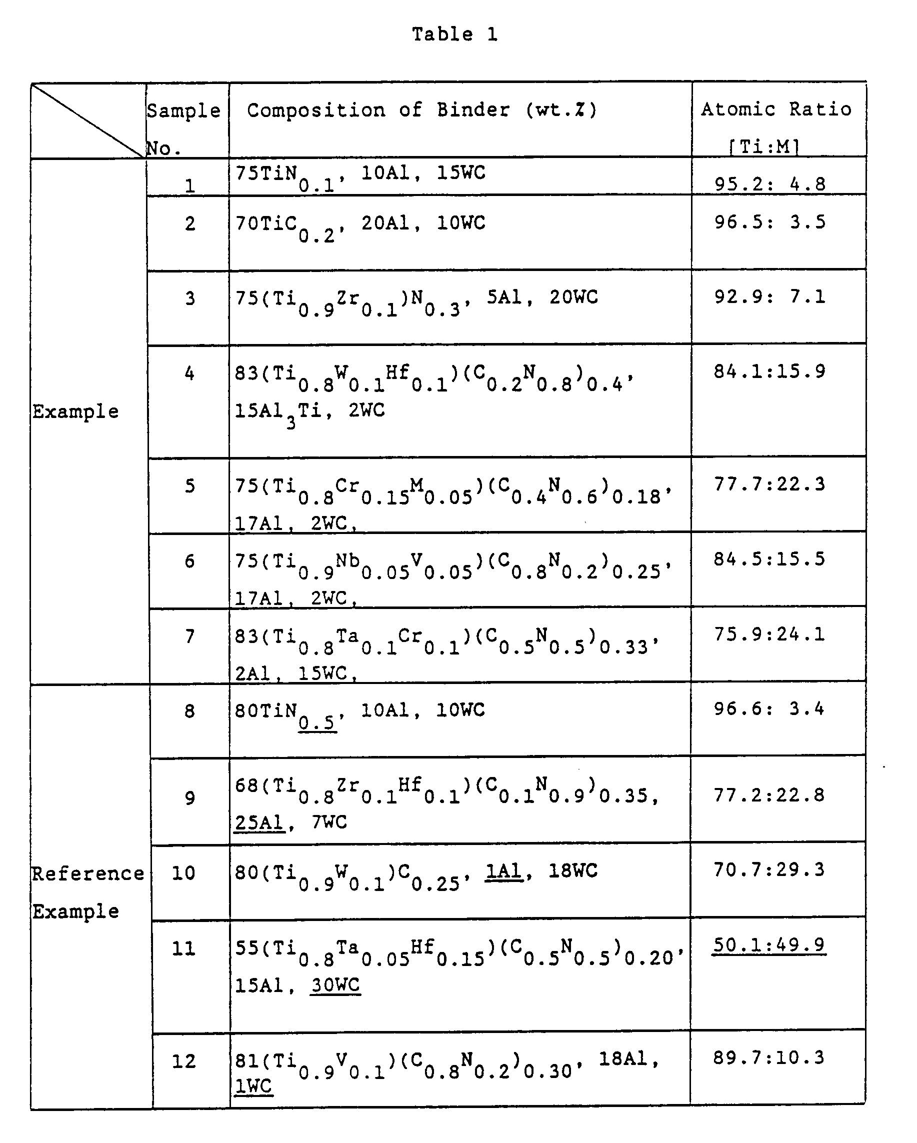

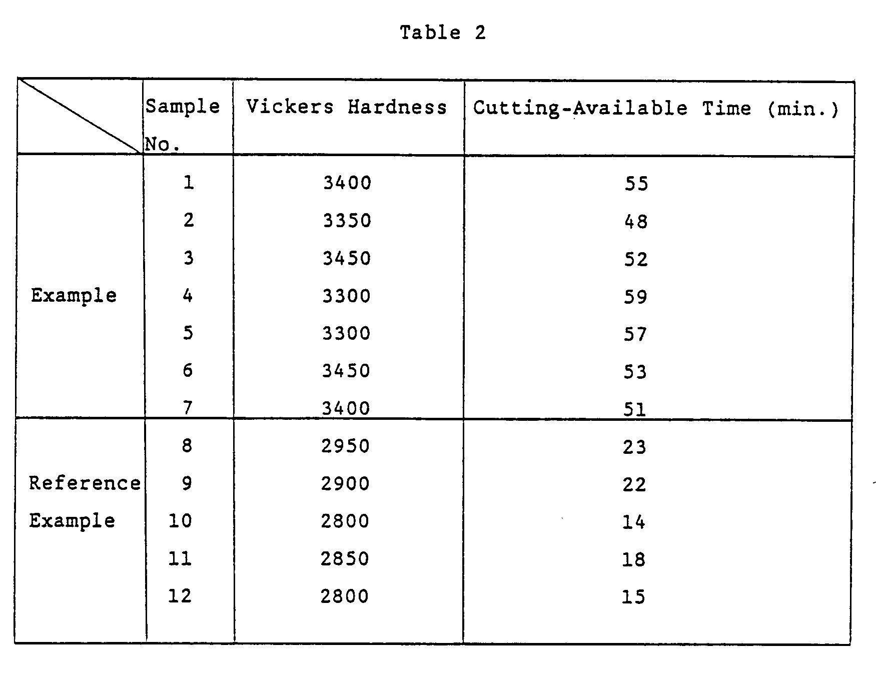

### Example 2

Powder materials of 76 percent by weight of (Ti_{0.9}Zr_{0.1})(C_{0.5}N_{0.5})_{0.25}, 12 percent by weight of Al and 12 percent by weight of WC were mixed with each other to obtain a binder of not more than 1 µm in particle size. The binder contains Ti and W in an atomic ratio of 86.1:13.9. This binder powder was mixed with CBN powder to prepare mixed powder materials as shown in Table 3.

The mixed powder materials thus obtained were sintered under a superhigh pressure similarly to Example 1, to obtain sintered bodies. These sintered bodies were worked into inserts for cutting work.

The inserts thus obtained were applied to cut outer peripheries of round bars of 300 mm in diameter prepared from SCM435 (H_{RC}: 22). Cutting conditions were as follows:
Cutting Speed: 580 m/min.
Depth of Cut: 0.6 mm
Feed Rate: 0.2 mm/rev.
Type: Dry
Table 3 shows cutting-available times. Referring to Table 3, samples Nos. 18 and 19 were prepared as reference examples. As to the reference examples, underlined values are out of the range of CBN contents according to the present invention.

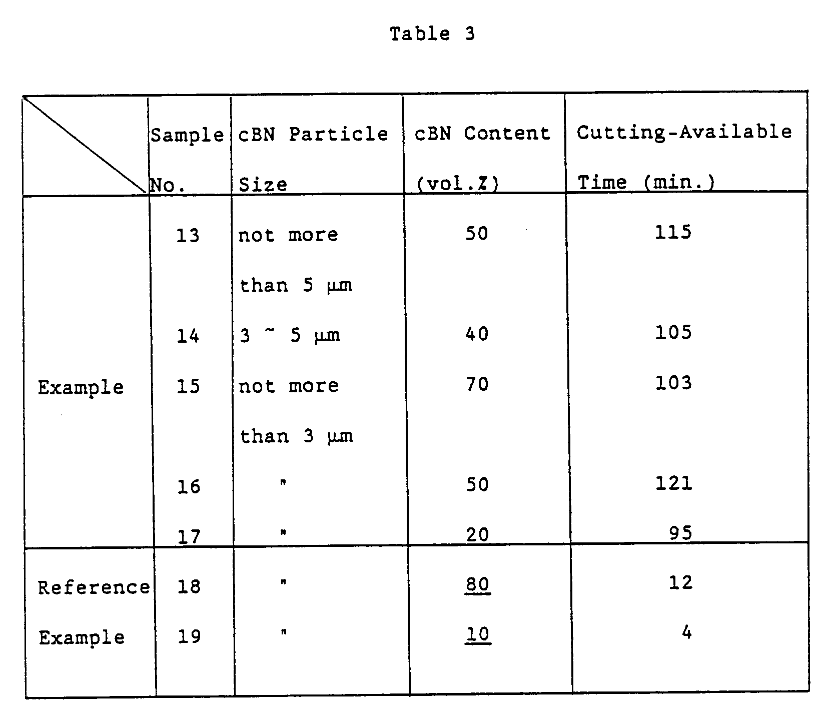

### Example 3

Powder materials of (Ti_{0.9}V_{0.05}Nb_{0.05})(C_{0.2}N_{0.8})_{z} having z values shown in Table 4 were mixed with Al powder materials and WC powder materials in ratios of 80:12:8 in weight percentage, to obtain binder powder materials of not more than 1 µm in particle size. These binder powder materials were mixed with CBN powder materials of 3 to 5 µm in particle size in a volume ratio of 50:50, to prepare mixed powder materials.

The mixed powder materials thus obtained were sintered under a superhigh pressure similarly to Example 1, to obtain sintered bodies. Table 4 also shows Vickers hardness values of these sintered bodies.

The above sintered bodies were worked into inserts for cutting work, to cut outer peripheries of round bars of 80 mm in diameter prepared from SKD11 (H_{RC}: 60). Cutting conditions were as follows:
Cutting Speed: 230 m/ min.
Depth of Cut: 0.15 mm
Feed Rate: 0.08 mm/rev.
Type: Dry
Table 4 also shows cutting-available times.

Referring to Table 4, the column "Atomic Ratio [Ti:M]" shows the ratios of Ti contained in the binders to transition metal elements belonging to the group IVa, Va and/or VIa of the periodic table excluding Ti. Samples Nos. 20, 26 and 27 were prepared as reference examples. As to the reference examples, underlined values are out of the range of the z values according to the present invention.

**Table 4**

| | Sample No. | Z Value in Ti Compound | Atomic Ratio [Ti:M] | Vickers Hardness | Cutting-Available Time (min.) |
|---|---|---|---|---|---|
| Reference Example | 20 | 0.05 | 87.7:12.3 | 2800 | 25 |
| Example | 21 | 0.1 | 87.7:12.3 | 3400 | 57 |
| | 22 | 0.2 | 87.6:12.4 | 3400 | 52 |
| | 23 | 0.3 | 87.6:12.4 | 3300 | 57 |
| | 24 | 0.4 | 87.5:12.5 | 3250 | 50 |
| | 25 | 0.45 | 87.5:12.5 | 3150 | 48 |
| Reference Example | 26 | 0.5 | 87.5:12.5 | 2950 | 27 |
| | 27 | 0.6 | 87.4:12.6 | 2950 | 24 |

### Example 4

Binder powder materials shown in Table 5 were prepared in a similar manner to Example 1. These binder powder materials were mixed with CBN powder materials of not more than 2 µm in particle size in a volume ratio of 70:30, to obtain mixed powder materials. These mixed powder materials were sintered under a superhigh pressure similarly to Example 1, to obtain sintered bodies. Table 5 shows Vickers hardness values of these sintered bodies.

Then, the sintered bodies were worked into inserts for cutting work, to cut outer peripheries of round bars of 70 mm in diameter prepared from carburizing steel of SNCM415 (H_{RC}: 58 to 61). Cutting conditions were as follows:
Cutting Speed: 180 m/min.
Depth of Cut: 0.1 mm
Feed Rate: 0.08 mm/rev.
Type: Dry
Table 6 shows cutting-available times.

Referring to Table 5, the column "Atomic Ratio [Ti:M]" shows the ratios of Ti contained in the binders to transition metal elements belonging to the group IVa, Va and/or VIa of the periodic table excluding Ti. Samples Nos. 31 to 33 were prepared as reference examples. As to these reference examples shown in Table 5, underlined values are out of the range of composition according to the present invention.

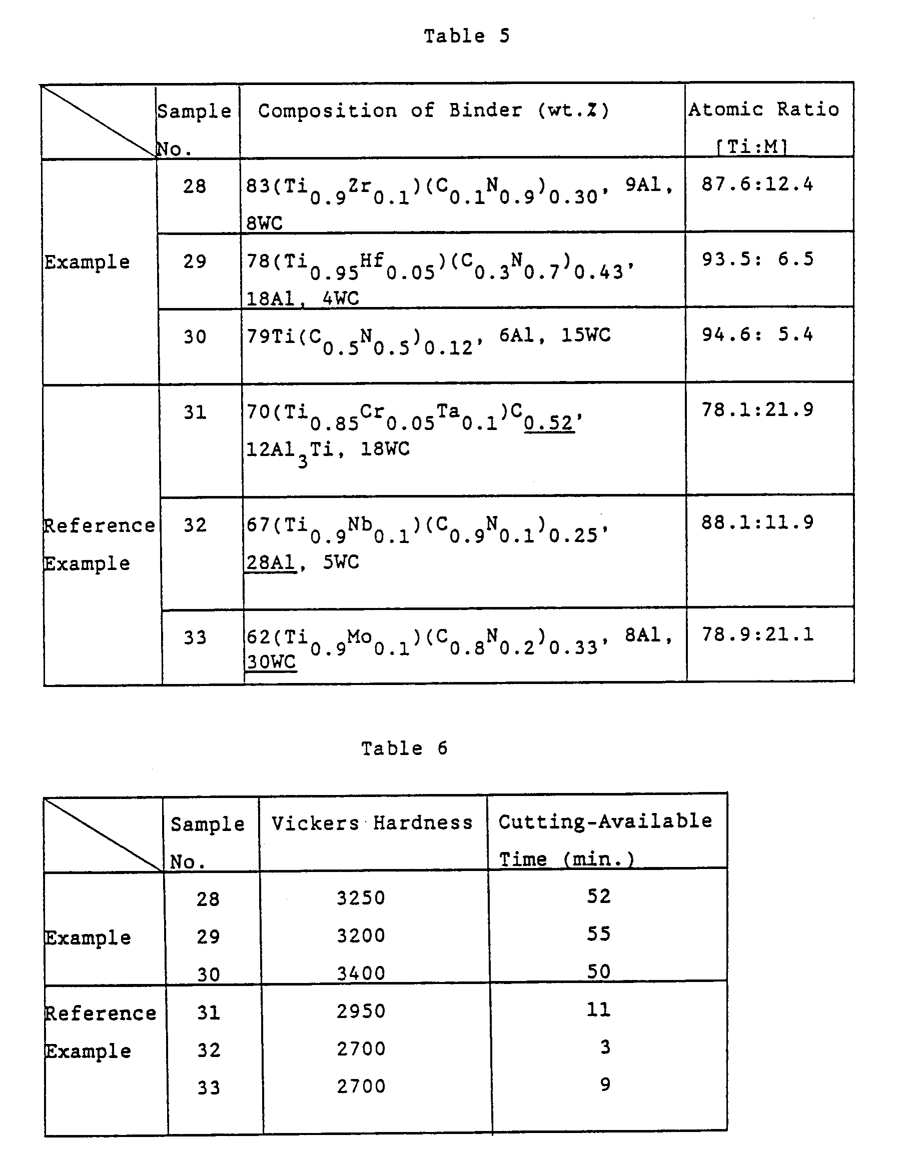

### Example 5

Nitride or carbo-nitride powder materials containing Ti were mixed with aluminum powder materials, ferrous metal powder materials and WC powder materials, to prepare binder powder materials of not more than 1 µm in average particle size through a pot and a ball of cemented carbide, as shown in Table 7. These binder powder materials were mixed with CBN powder materials of not more than 3 µm in particle size in a volume ratio of 45:55, to prepare mixed powder materials. Circular plates of cemented carbide composed of WC - 10 wt.% Co were introduced into Mo vessels, which were then filled with the mixed powder materials. Then the vessels were introduced into superhigh pressure/temperature apparatuses, and sintered under a pressure of 51 kb and a temperature of 1300°C for 20 minutes.

Sintered bodies thus obtained were examined through X-ray diffraction, to observe peaks which were regarded as those of nitrides, carbides and carbo-nitrides containing Ti, TiB₂, AlB₂, AlN and borides and carbides of W, or W in all of the sintered bodies. Table 8 shows Vickers hardness values of these sintered bodies.

The aforementioned respective sintered bodies were worked into inserts for cutting work, to cut outer peripheries of round bars of 100 mm in diameter prepared from SKD11 (H_{RC}: 60 to 62). Cutting conditions were as follows:
Cutting Speed: 230 m/min.
Depth of Cut: 0.2 mm
Feed Rate: 0.12 mm/rev.
Type: Dry
Table 8 also shows times of cutting performed before cutting edge chipping.

Referring to Table 7, the column "Atomic Ratio [Ti:M]" shows the atomic ratios of Ti to transition metal elements belonging to the group IVa, Va and/or VIa of the periodic table excluding Ti.

Referring to Tables 7 and 8, samples Nos. 41 to 47 were prepared as reference examples. As to these reference examples shown in Table 7, underlined values are out of the range of composition according to the present invention.

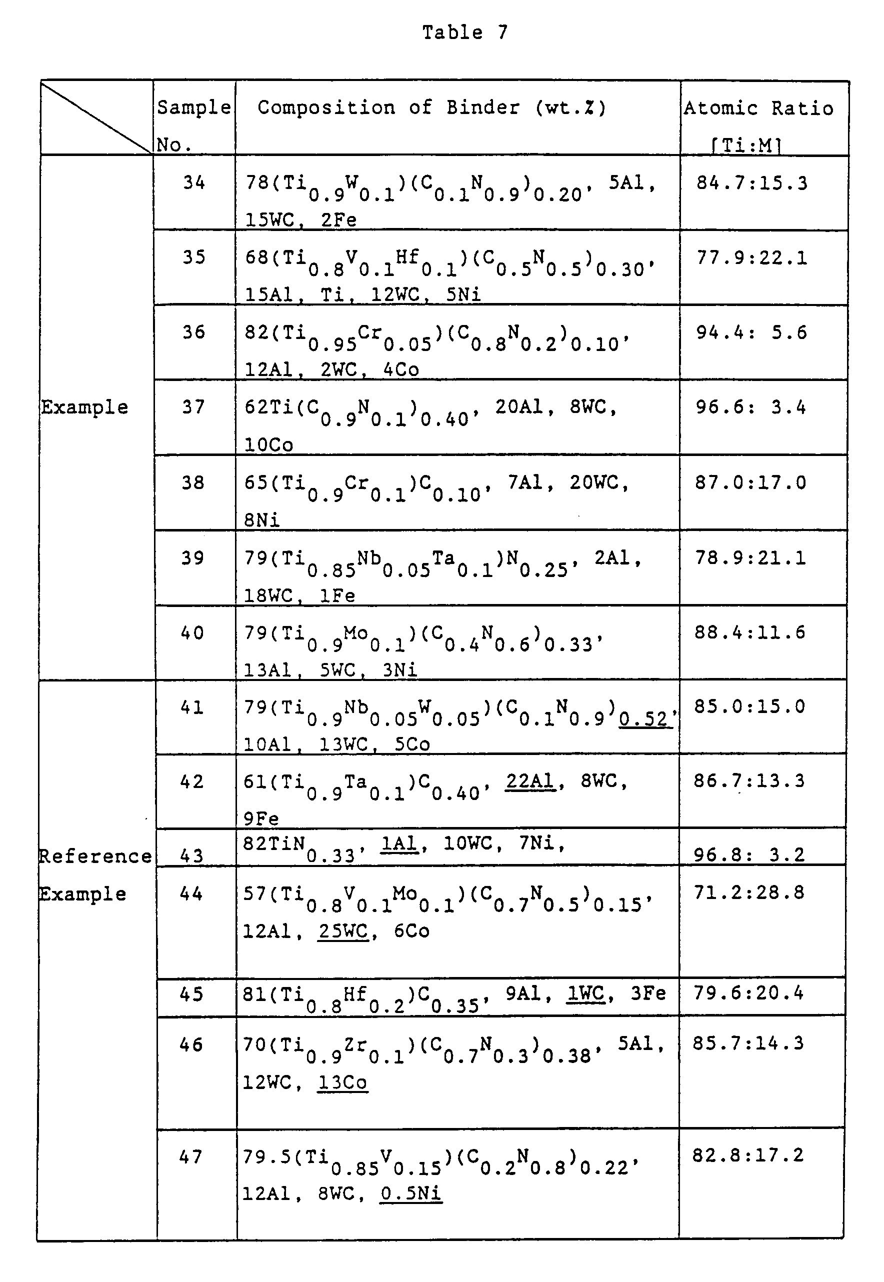

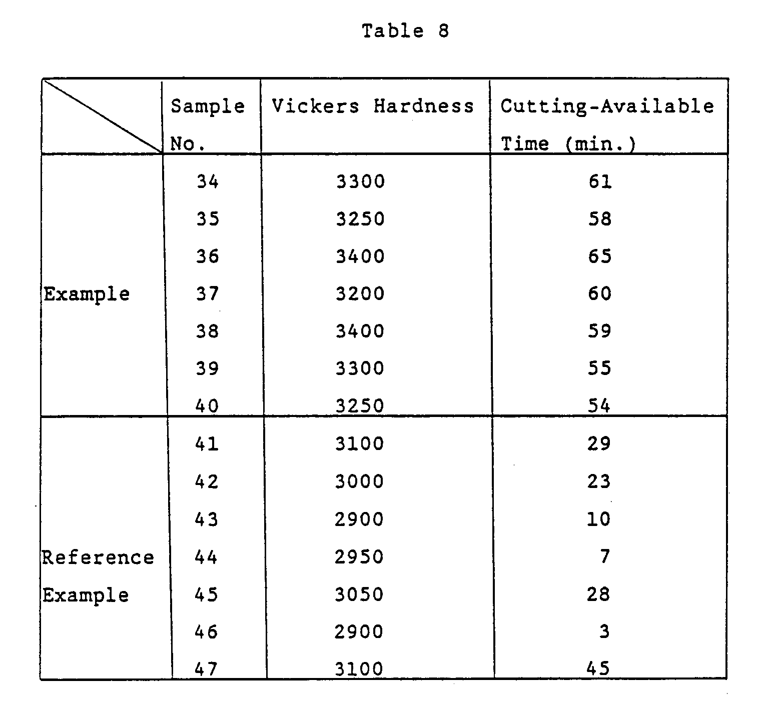

### Example 6

Powder materials of (Ti_{0.9}W_{0.1})N_{0.20}, Al, WC and one or more ferrous metals were mixed in ratios of 75:12:10:3 in weight percentage, to obtain mixed binder powder of not more than 1 µm in particle size. This binder contains Ti and W in an atomic ratio of 86.2:13.8. Such binder powder materials were mixed with CBN powder materials to prepare mixed powder materials as shown in Table 9.

The mixed powder materials thus obtained were sintered under a superhigh pressure similarly to Example 5, to obtain sintered bodies. These sintered bodies were worked into inserts for cutting work.

The inserts were applied to cut outer peripheries of round bars of 300 mm in diameter prepared from SCM435 (H_{RC}: 22). Cutting conditions were as follows:
Cutting Speed: 560 m/min.
Depth of Cut: 1.0 mm
Feed Rate: 0.5 mm/rev.
Type: Dry
Table 9 also shows cutting-available times.

Samples Nos. 53 and 54 were prepared as reference examples.

As to the reference examples, underlined values are out of the range of CBN contents according to the present invention.

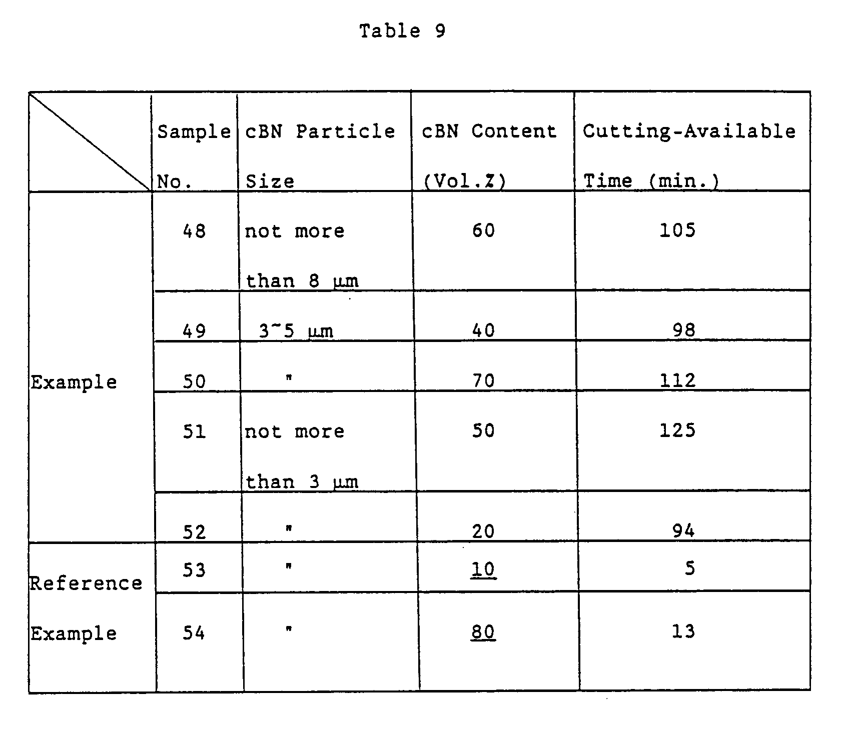

### Example 7

(Ti_{0.8}Zr_{0.1}Ta_{0.1})(C_{0.4}N_{0.6})_{z} powder materials having z values shown in Table 10 were mixed with Al, WC and Co powder materials in ratios of 70:15:12:3 in weight percentage to obtain binder powder materials of not more than 1 µm in particle size. The binder powder materials were mixed with CBN powder materials in a volume ratio of 40:60, to prepare mixed powder materials.

The obtained mixed powder materials were sintered under a superhigh pressure similarly to Example 5, to obtain sintered bodies. Table 10 also shows Vickers hardness values of these sintered bodies.

The sintered bodies thus obtained were worked into inserts for cutting work, to cut outer peripheries of round bars of 80 mm in diameter prepared from SUJ2 (H_{RC}: 60). Cutting conditions were as follows:
Cutting Speed: 250 m/min.
Depth of Cut: 0.13 mm
Feed Rate: 0.10 mm/rev.
Type: Dry
Table 10 also shows cutting-available times. Referring to Table 10, the column "Atomic Ratio [Ti:M]" shows the ratios of Ti contained in the binders to transition metal elements belonging to the group IVa, Va and/or VIa of the periodic table excluding Ti.

Samples Nos. 55, 61 and 62 were prepared as reference examples. As to the reference examples, underlined values are out of the range of z values according to the present invention.

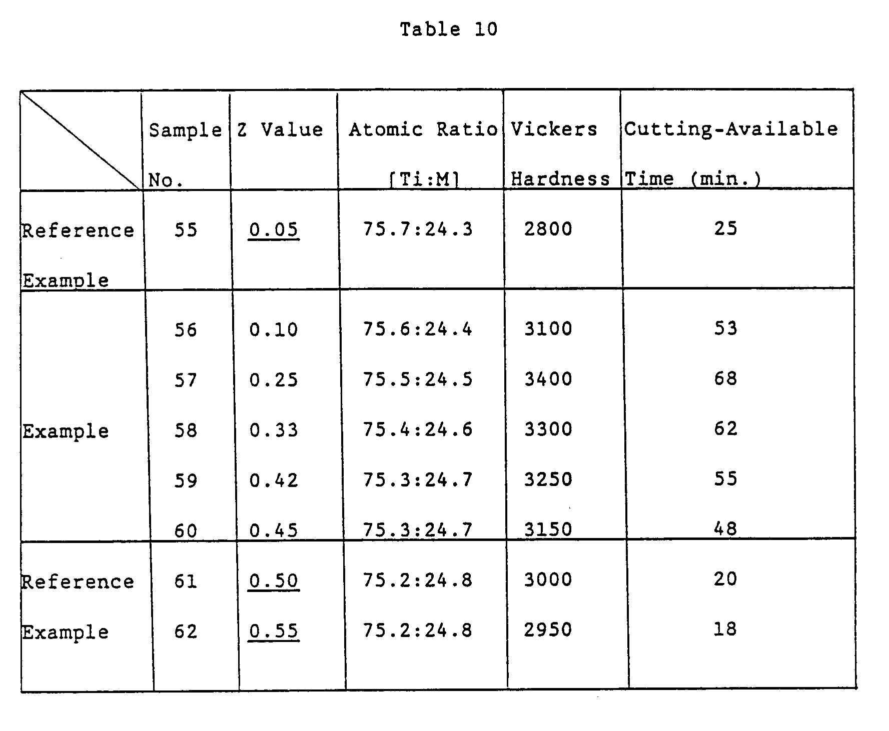

### Example 8

Binder powder materials shown in Table 11 were prepared in a similar manner to Example 5. These binder powder materials were mixed with CBN powder materials of not more than 2 µm in particle size in a volume ratio of 70:30, to obtain mixed powder materials.

Then these mixed powder materials were sintered under a superhigh pressure similarly to Example 5, to obtain sintered bodies. Table 11 shows Vickers hardness values of these sintered bodies.

The sintered bodies were worked into inserts for cutting work, to cut outer peripheries of nitrided round bars of 100 mm in diameter prepared from SNCM645 (H_{RC}: 67). Cutting conditions were as follows:
Cutting Speed: 180 m/min.
Depth of Cut: 0.07 mm
Feed Rate: 0.08 mm/rev.
Type: Dry
Table 12 shows cutting-available times.

Referring to Table 11, the column "Atomic Ratio [Ti:M]" shows the ratios of Ti contained in the binders to transition metal elements belonging to the group IVa, Va and/or VIa of the periodic table excluding Ti.

Samples Nos. 66 to 68 were prepared as reference examples. As to the reference examples, underlined values are out of the range of composition according to the present invention.

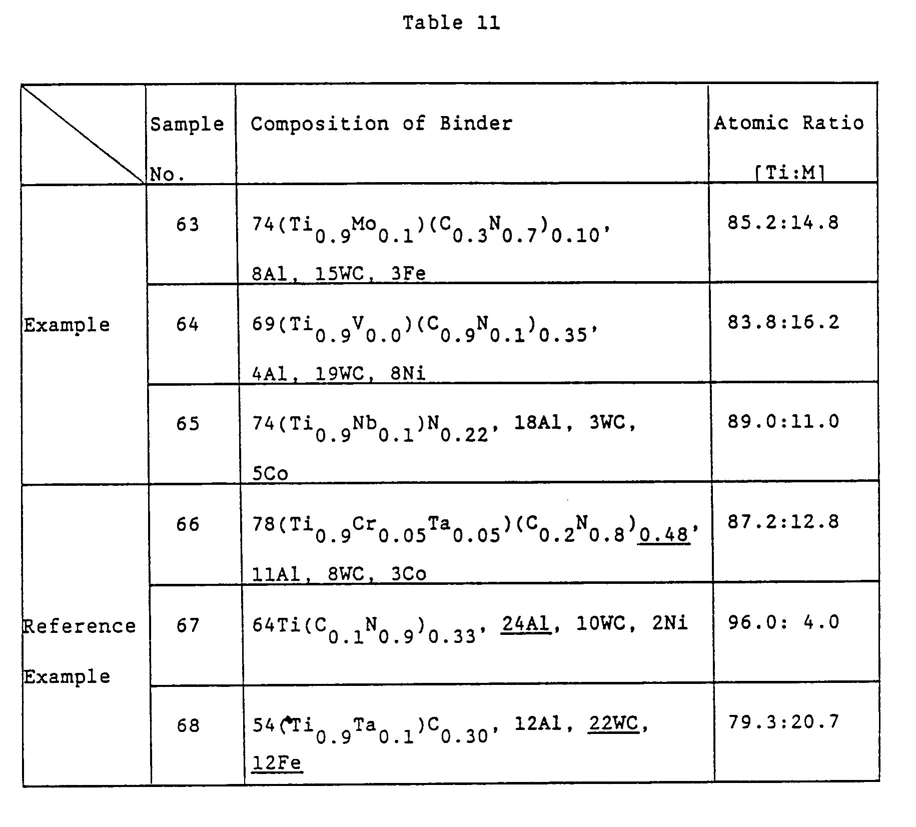

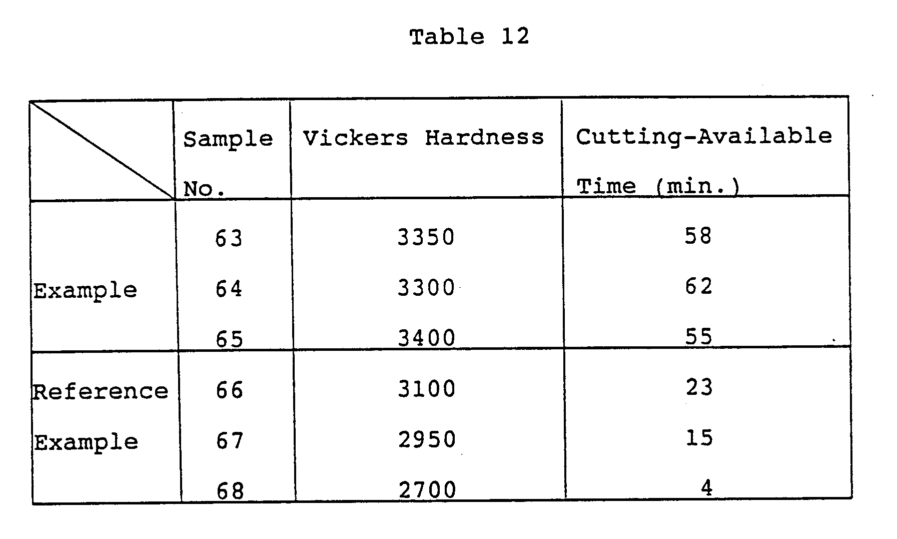

## Claims

1. A hard sintered body for tools obtained by sintering mixed powder containing at least 20 percent by volume and not more than 70 percent by volume of cubic boron nitride powder and having a remainder formed of binder powder under a superhigh pressure,
said binder containing at least 2 percent by weight and not more than 20 percent by weight of Al and at least 2 percent by weight and not more than 20 percent by weight of W, having a remainder formed of one or more Ti compounds selected from a group of TiN_{z}, Ti(C,N)_{z}, TiC_{z}, (Ti,M)N_{z}, (Ti,M)(C,N)_{z} and (Ti,M)C_{z}, where M represents transition metal element(s) belonging to the group IVa, Va and/or VIa of the periodic table excluding Ti and 0.1 ≦ z ≦ 0.45, and containing said Al in the form of at least either Al or a compound of Al and Ti and said W in the form of at least one of W, WC and a compound of W and Ti, the atomic ratio of contained said Ti to transition metal element(s) belonging to the group IVa, Va and/or VIa of the periodic table including Ti being at least 2/3 and not more than 97/100,
cubic boron nitride crystals being bonded with each other through bonding phases formed by said binder in the structure of said sintered body.

2. A hard sintered body for tools in accordance with claim 1, containing at least one of one or more Ti compounds selected from a group of TiN, TiC, Ti(C,N), (Ti,M)N, (Ti,M)C and (Ti,M)(C,N), titanium boride, aluminum boride, aluminum nitride, a tungsten compound and tungsten in its product in addition to said cubic boron nitride.

3. A hard sintered body for tools in accordance with claim 1, wherein said M represents tungsten.

4. A hard sintered body for tools obtained by sintering mixed powder containing at least 20 percent by volume and not more than 70 percent by volume of cubic boron nitride powder and having a remainder formed of binder powder under a superhigh pressure,
said binder containing at least 2 percent by weight and not more than 20 percent by weight of Al, at least 2 percent by weight and not more than 20 percent by weight of W and at least 1 percent by weight and not more than 10 percent by weight of one or more ferrous metals, having a remainder formed of one or more Ti compounds selected from a group of TiN_{z}, Ti(C,N)_{z}, TiC_{z}, (Ti,M)N_{z}, (Ti,M)(C,N)_{z} and (Ti,M)C_{z}, where M represents transition metal element(s) belonging to the group IVa, Va and/or VIa of the periodic table excluding Ti and 0.1 ≦ z ≦ 0.45, and containing said Al in the form of either Al or a compound of Al and Ti and said W in the form of at least one of W, WC and a compound of W and Ti, the atomic ratio of contained said Ti to transition metal element(s) belonging to the group IVa, V and/or VIa of the periodic table including Ti being at least 2/3 and not more than 97/100,
cubic boron nitride crystals being bonded with each other through bonding phases formed by said binder in the structure of said sintered body.

5. A hard sintered body for tools in accordance with claim 4, containing at least one of one or more Ti compounds selected from a group of TiN, TiC, Ti(C,N), (Ti,M)N, (Ti,M)C and (Ti,M)(C,N), titanium boride, aluminum boride, aluminum nitride, a tungsten compound and tungsten in its product in addition to said cubic boron nitride.

6. A hard sintered body for tools in accordance with claim 4, wherein said M represents tungsten.

## Patentansprüche

1. Harter Sinterkörper für Werkzeuge erhältlich durch Sintern von Mischpulver, das mindestens 20 Vol.-% und nicht mehr als 70 Vol.-% kubisches Bornitridpulver enthält und der Rest aus Bindemittelpulver bei extrem hohem Druck gebildet ist,
wobei das Bindemittel mindestens 2 Gew.-% und nicht mehr als 20 % Gew.-% Al und mindestens 2 Gew.-% und nicht mehr als 20 % Gew.-% W enthält, und der Rest aus einer oder mehreren Ti-Verbindungen gebildet ist, die aus der aus TiN_{z}, Ti(C,N)_{z}, TiC_{z}, (Ti,M)N_{z}, (Ti,M)(C,N)_{z} und (Ti,M)C_{z} bestehenden Gruppe ausgewählt wird, wobei M ein/mehrere Übergangsmetallelement(e) der Gruppe IVa, Va und/oder VIa des Periodensystems außer Ti darstellt und 0,1 ≦ z ≦ 0,45 ist, und das Al in Form mindestens entweder von Al oder einer Verbindung aus Al und Ti und das W in Form mindestens von W, WC oder einer Verbindung aus W und Ti enthalten ist, und das Atomverhältnis von enthaltenem Ti zu dem/den Übergangsmetall(en) der Gruppe IVa, Va und/oder VIa des Periodensystems einschließlich Ti mindestens 2/3 und nicht mehr als 97/100 beträgt,
wobei die kubischen Bornitridkristalle durch Bindungsphasen miteinander verbunden sind, die durch das Bindemittel in der Struktur des Sinterkörpers gebildet werden.

2. Harter Sinterkörper für Werkzeuge nach Anspruch 1, wobei dieser zusätzlich zu dem kubischen Bornitrid im Produkt mindestens eine oder mehrere Ti-Verbindungen enthält, die aus der aus TiN, TiC, Ti(C,N) (Ti,M)N, (Ti,M)C und (Ti,M)(C,N), Titanborid, Aluminiumborid, Aluminiumnitrid, einer Wolfram-Verbindung und Wolfram bestehenden Gruppe ausgewählt ist/sind.

3. Harter Sinterkörper für Werkzeuge nach Anspruch 1, wobei das M Wolfram darstellt.

4. Harter Sinterkörper für Werkzeuge, erhältlich durch Sintern von Mischpulver, das mindestens 20 Vol.-% und nicht mehr als 70 Vol.-% kubisches Bornitridpulver enthält und der Rest aus Bindemittelpulver bei extrem hohem Druck gebildet ist,
wobei das Bindemittel mindestens 2 Gew.-% und nicht mehr als 20 Gew.-% Al, mindestens 2 Gew.-% und nicht mehr als 20 Gew.-% W und mindestens 1 Gew.-% und nicht mehr als 10 Gew.-% eines oder mehrerer Eisenmetalle enthält, und der Rest aus einer oder mehreren Ti-Verbindungen gebildet ist, die aus der aus TiN_{z}, Ti(C,N)_{z}, TiC_{z}, (Ti,M)N_{z}, (Ti,M)(C,N)_{z} und (Ti,M)C_{z} bestehenden Gruppe ausgewählt wird/werden, wobei M ein oder mehrere Übergangsmetallelemente der Gruppe IVa, Va und/oder VIa des Periodensystems außer Ti darstellt und 0,1 ≦ z ≦ 0,45 ist und das Al in Form entweder von Al oder einer Verbindung aus Al und Ti und das W in Form mindestens von W, WC oder einer Verbindung aus W und Ti enthalten ist, wobei das Atomverhältnis von enthaltenem Ti zu dem/den Übergangsmetallelement(en) der Gruppe IVa, Va und/oder VIa des Periodensystems einschließlich Ti mindestens 2/3 und nicht mehr als 97/100 beträgt,
und die kubischen Bornitrid-Kristalle durch Bindungsphasen miteinander verbunden sind, die durch das Bindemittel in der Struktur des Sinterkörpers gebildet werden.

5. Harter Sinterkörper für Werkzeuge nach Anspruch 4, der zusätzlich zu dem kubischen Bornitrid im Produkt mindestens eine oder mehrere Ti-Verbindungen enthält, die aus der aus TiN, TiC, Ti(C,N), (Ti,M)N, (Ti,M)C und (Ti,M)(C,N), Titanborid, Aluminiumborid, Aluminiumnitrid, einer Wolframverbindung und Wolfram bestehenden Gruppe ausgewählt wird/werden.

6. Harter Sinterkörper für Werkzeuge nach Anspruch 4, wobei das M Wolfram darstellt.

## Revendications

1. Corps dur fritté pour outils obtenu en frittant une poudre mélangée contenant au moins 20 pour cent par volume et pas plus de 70 pour cent par volume de poudre de nitrure de bore cubique et comportant un restant formé de poudre de liant, sous une pression extrêmement élevée,
ledit liant contenant au moins 2 pour cent en poids et pas plus de 20 pour cent en poids d'Al, et au moins 2 pour cent en poids et pas plus de 20 pour cent en poids de W, comportant un restant formé d'un ou de plusieurs composés de Ti choisis dans le groupe constitué de TiN_{z}, Ti(C,N)_{z}, TiC_{z}, (Ti,M)N_{z}, (Ti,M)(C,N)_{z} et (Ti,M)C_{z}, M représentant un (des) élément(s) métallique(s) de transition appartenant au groupe constitué de IVa, Va et/ou VIa du tableau périodique à l'exception de Ti et 0,1 ≦ z ≦ 0,45, et contenant ledit Al sous la forme d'au moins soit Al, soit d'un composé d'Al et de Ti, et ledit W sous la forme d'au moins soit W, soit WC, et un composé de W et de Ti, le rapport atomique dudit Ti contenu et de l'(des) élément(s) métallique(s) de transition appartenant au groupe constitué de IVa, Va et/ou VIa du tableau périodique, comportant au moins 2/3 et pas plus de 97/100 de Ti,
les cristaux de nitrure de bore cubiques étant liés entre eux par des phases de liaison formées par ledit liant dans la structure dudit corps fritté.

2. Corps dur fritté pour outils selon la revendication 1, contenant au moins un parmi un ou plusieurs composés de Ti choisis dans le groupe constitué de TiN, TiC, Ti(C,N), (Ti,M)N, (Ti,M)C et (Ti,M)(C,N), borure de titane, borure d'aluminium, nitrure d'aluminium, composé de tungstène et tungstène dans son produit, en plus dudit nitrure de bore cubique.

3. Corps dur fritté pour outils selon la revendication 1, dans lequel M représente du tungstène.

4. Corps dur fritté pour outils obtenu en frittant une poudre mélangée contenant au moins 20 pour cent par volume, et pas plus de 70 pour cent par volume de poudre de nitrure de bore cubique et comportant un restant formé de poudre de liant, sous une pression extrêmement élevée,
ledit liant contenant au moins 2 pour cent en poids et pas plus de 20 pour cent en poids d'Al, et au moins 2 pour cent en poids et pas plus de 20 pour cent en poids de W, et au moins 1 pour cent en poids et pas plus de 10 pour cent en poids d'un ou de plusieurs métaux ferreux, comportant un restant formé d'un ou de plusieurs composés de Ti, choisis dans le groupe constitué de TiN_{Z}, Ti(C,N)_{Z,} TiC_{Z}, (Ti,M)N_{Z}, (Ti,M)(C,N)_{Z} et (Ti,M)C_{Z}, M représentant un (des) élément(s) métallique(s) de transition appartenant au groupe constitué de IVa, Va et/ou VIa du tableau périodique à l'exception de Ti et 0,1 ≦ z ≦ 0,45, et contenant ledit Al sous la forme soit d'Al, soit d'un composé d'Al et de Ti, et ledit W sous la forme d'au moins soit W, soit WC, et un composé de W et de Ti, le rapport atomique dudit Ti contenu et de l'(des) élément(s) métallique(s) de transition appartenant au groupe constitué de IVa, V et/ou VIa du tableau périodique, comportant au moins 2/3 et pas plus de 97/100 de Ti,
les cristaux de nitrure de bore cubiques étant liés entre eux par des phases de liaison formées par ledit liant dans la structure dudit corps fritté.

5. Corps dur fritté pour outils selon la revendication 4, contenant au moins un parmi un ou plusieurs composés de Ti choisis dans le groupe constitué de TiN, TiC, Ti(C,N), (Ti,M)N, (Ti,M)C et (Ti,M)(C,N), borure de titane, borure d'aluminium, nitrure d'aluminium, composé de tungstène et tungstène dans son produit, en plus dudit nitrure de bore cubique.

6. Corps dur fritté pour outils selon la revendication 4, dans lequel M représente du tungstène.
